# EUROPEAN PATENT SPECIFICATION

(11) **EP 0 403 164 B1**
(45) Date of publication and mention of the grant of the patent: **17.03.1993**
(21) Application number: 90306231.3
(22) Date of filing: 08.06.1990
(51) Int. Cl.: B29C 47/08

(54) **Apparatus for taking residual solid matter out of extrusion head**
Vorrichtung zum Herausnehmen fester Restmasse aus einem Extruderkopf
Dispositif pour prendre une masse résiduelle solide d'une tête d'extrusion

(30) Priority: 13.06.1989 JP 150307/89
(43) Date of publication of application: 19.12.1990
(73) Proprietor: Bridgestone Corporation, Tokyo 104 (JP)
(72) Inventor: Ogata, Masayuki, Kodaira City, Tokyo (JP); Yano, Eiji, Kodaira City, Tokyo (JP); Usui, Yukio, Kuroiso City, Tochigi Pref. (JP)
(74) Representative: Whalley, Kevin

(56) References cited:
- US-A- 4 556 562

## Description

This invention relates to an apparatus for taking residual solid matter out of an extrusion head.

In tire industries, for example, extruders have been widely used for producing continuous rubber sheets such as treads, side treads and the like. With such extruders, in order to change over kinds of rubbers to be extruded, after the extruders are once rested, rubbers remaining in extrusion heads of the extruders must be removed to clean the inside of the heads.

Up to the present, in order to remove such residual rubbers in the extrusion head, after a V-block as a cover is removed from the extrusion head and hanged by a hanging means such as an electric hoist, the hanging means and the V-block are moved to a poised position on one side of the extrusion head. Thereafter, a worker manually removes the residual rubbers from the extrusion head, and the V-block is then returned onto the extrusion head.

However, the removal of the rubbers from the extrusion head in this manner is generally time-consuming and troublesome operation because of the residual rubbers firmly adhering to the extrusion head and being of unexpectedly massive. Therefore, such a manual removal imperatively lowers the efficiency of productivity and urges the worker to do heavy work.

It is an object of the invention to provide an improved apparatus for taking residual solid matter out of an extrusion head, which is able to remove the residual solid matter for a short time with ease to improve the productivity and lighten the burden of a worker.

In order to accomplish the object, the apparatus for taking residual solid matter out of an extrusion head according to the invention comprises grasping means for grasping residual solid matter in the extrusion head, moving means for moving the grasping means between a grasping position in the extrusion head and an exhausting position on one side of the extrusion head, disengaging means for urging the residual solid matter to disengage it from the grasping means when the grasping means has arrived at the exhausting position and released the residual solid matter, and control means for controlling the grasping means, the moving means and the disengaging means.

In order to take the residual solid matter out of the extrusion head, the following operation is performed with the apparatus according to the invention. After a cover is removed from the extrusion head to open it, the grasping means is moved to the grasping position in the extrusion head by means of the moving means. The residual matter is then grasped by the grasping means and the grasping means is then moved away from the extrusion head by the moving means. In this case, even if the residual matter is massive and firmly adhering to the extrusion head, the residual matter can be reliably and easily removed from the extrusion head inasmuch as the grasping means is forcedly moved by the moving means.

Then, the grasping means grasping the residual solid matter is moved to the exhausting position by the moving means. After the grasping means has arrived at the exhausting position, the residual solid matter is released and disengaged from the grasping means. If the residual solid matter firmly adheres to the grasping means, it may be difficult to disengage the solid matter from the grasping means. To solve this problem, the disengaging means applies a force to the solid matter to disengage it from the grasping means with a great certainty. All the operations of the grasping means, the moving means and disengaging means are controlled by the control means. As a result, a worker for extrusion is free from an operation for taking residual solid matters out of the extrusion head so that the productivity of the tire building is improved and the burden on the worker is lightened.

The invention will be more fully understood by referring to the following detailed specification and claims taken in connection with the appended drawings.
Fig. 1 is a schematic front elevation illustrating one embodiment of the apparatus according to the invention;
Fig. 2 is a schematic plan view of the apparatus shown in Fig. 1;
Fig. 3 is a view illustrating grasping means of the apparatus viewed in directions of arrows III in Fig. 1; and
Fig. 4 is a view illustrating the grasping means viewed in directions of arrows IV in Fig. 3.

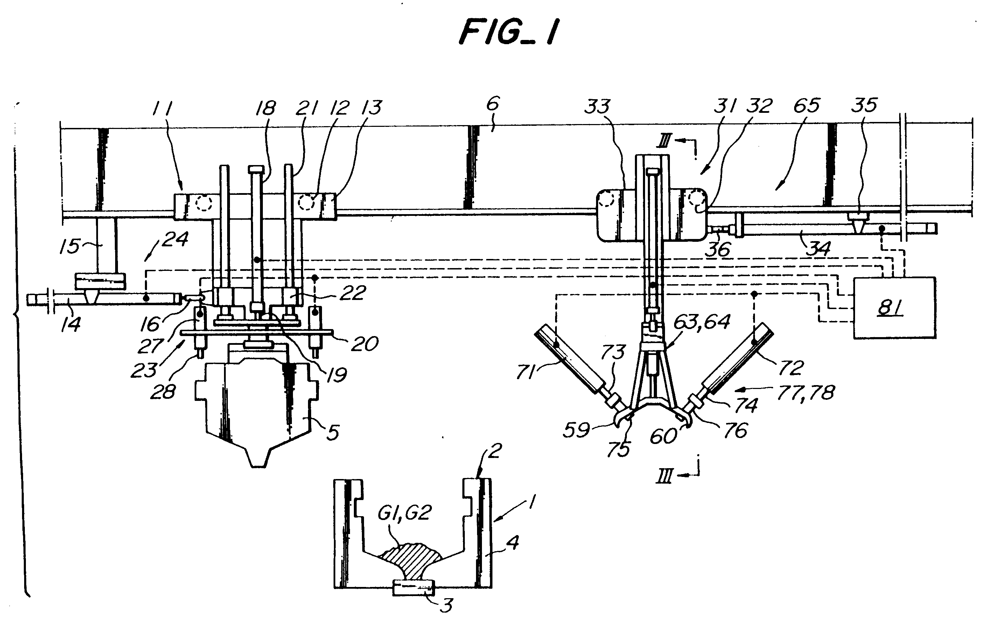

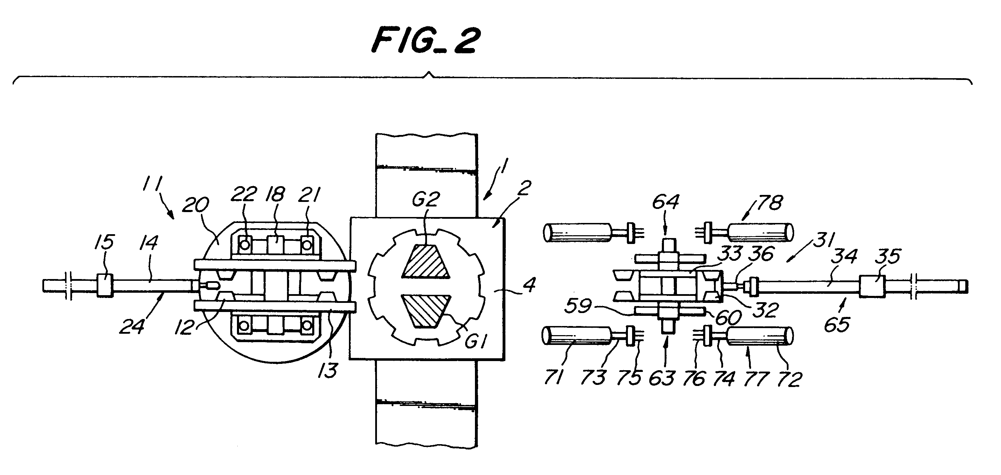

Referring to Figs. 1 and 2, an opposed type extruder 1 has an extrusion head 2 to which different kinds of rubbers are supplied from both sides thereof by a screw (not shown) of the extruder 1. The rubbers supplied to the extrusion head 2 are extruded through dies 3 to form a continuous rubber sheet such as a tread, side tread or the like. The extrusion head 2 has a main body 4 and a V-block 5 as a cover detachably secured to the main body 4 to form a rubber path between the V-block 5 and the main body 4. As a result, when the V-block 5 is removed from the main body 4, the rubber path is exposed to be available. Different kinds of rubbers G1 and G2 reside in the rubber path as residual solid materials. A horizontal rail 6 is arranged above the extruder 1 and extending in a direction intersecting the opposed type extruder 1.

Removing means 11 for removing the V-block 5 from the extrusion head 2 has a trolley 13 provided with a plurality of rollers 12 adapted to roll on the rail 6. A cylinder 14 is secured through a bracket 15 to the rail 6 and extending in parallel with the rail 6 on one side of the extruder 1. A rod end of a piston rod 16 of the cylinder 14 is connected to the trolley 13. Therefore, when the cylinder 14 is actuated, the trolley 13 is moved along the rail 6 between a position directly above the extrusion head 2 and a position on one side of the extrusion head 2.

To the trolley 13 is connected a vertical cylinder 18 having a piston rod 19 whose rod end has a support member 20 connected thereto. To the support member 20 are fixed a plurality of guide rod 21 in parallel with the cylinder 18. The guide rods 21 extend through a guide sleeve 22 secured to the movable trolley 13. Moreover, the support member 20 is provided with a hook (not shown) for hanging the V-block thereon and holding it thereat. When the cylinder 18 is actuated, the support member 20 and the hook are raised or lowered guided by the guide rods 21 and the guide sleeves 22. The support member 20 and the hook form as a whole holding means 23 for holding the V-block 5. The holding means 23 are moved upon operating the cylinders 14 and 18 between a removing position where the V-block 5 is removed from the extrusion head 2 and a poising position spaced on one side from the extrusion head 2. The cylinders 14 and 18 form as a whole driving means 24 for moving the holding means 23.

The support member 20 is provided in the proximity of its outer periphery with plural (three in this embodiment) vertical cylinders 27 as peeling means. With the holding means 23 being in the removing position, when the piston rods 28 of these cylinders 27 are extended, rod ends of the piston rods 28 abut against an upper surface of the extrusion head 2. As a result, reaction of the abutting force is transmitted through the cylinders 27 to the holding means 23 to raise the holding means 23 together with the V-block 5. Therefore, the V-block 5 is removed from the residual rubbers G1 and G2 adhering to the V-block 5.

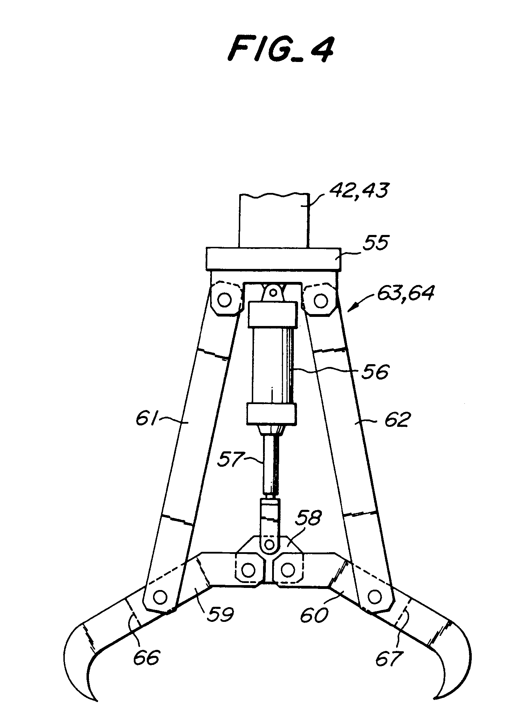

Referring to Figs. 1, 2, 3 and 4, taking-out means 31 for taking the residual rubbers G1 and G2 out of the extrusion head 2 comprises a movable trolley 33 having a plurality of rollers 32 rolling on the rail 6. A cylinder 34 in parallel with the rail 6 is mounted onto the rail 6 by means of a bracket 35 on the other side of the extruder 1 with respect to the taking-out means 31. A rod end of a piston rod of the cylinder 34 is connected to the trolley 33. As a result, when the cylinder 34 is actuated, the trolley 33 is moved along the rail 6 between a position immediately above the extrusion head 2 and a position on the other side of the extrusion head 2.

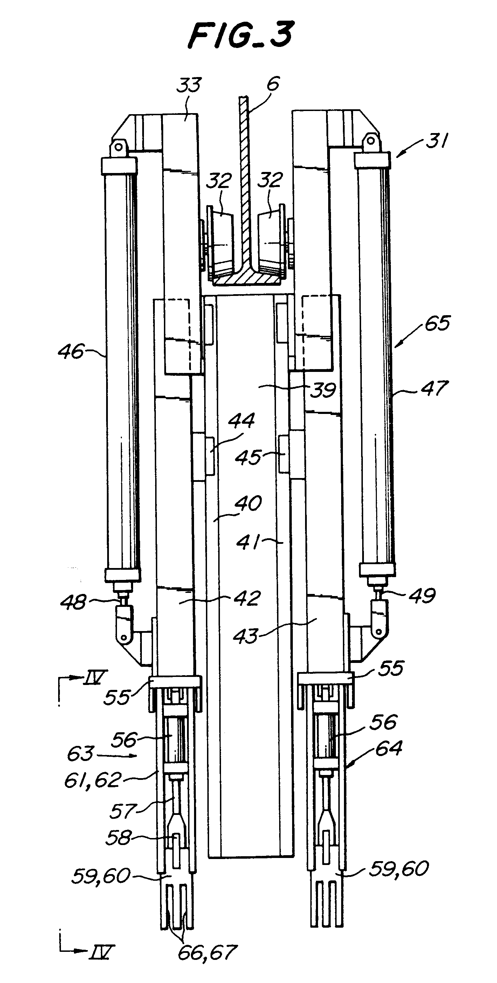

The movable trolley 33 has a vertical beam 39 vertically extending referring to Fig. 3. Vertically extending guide rails 40 and 41 are fixed on both side faces of the vertical beam 39. Lifting members 42 and 43 are arranged in parallel with the vertical beam 39 and have a plurality of slide bearings 44 and 45 mounted thereonto and adapted to slidably engaging the guide rails 40 and 41. Cylinders 46 and 47 are provided in parallel with the vertical beam 39 and have head ends connected to the movable trolley 33 and piston rods 48 and 49 whose rod ends are connected to the lifting members, respectively. As a result, when the cylinders 46 and 47 are actuated, the lifting members 42 and 43 are raised or lowered together with grasping means later described along the guide rails 40 and 41.

To lower ends of the lifting members 42 and 43 are fixed connecting members 55, respectively, to which are connected head ends of cylinders 56 having piston rods 57. Connecting plates 58 are secured to rod ends of the piston rods 57. To each of the connecting plates 58 are rotatably connected bottom ends of a pair of grasping pawls 59 and 60. Moreover, to each of the connecting members 55 are connected upper ends of transmission links 61 and 62 whose lower ends are connected to centers of the grasping pawls 59 and 60, respectively. As a result, when the cylinders 56 are actuated, the grasping pawls 59 and 60 are rocked about their bottom ends so as to close and open.

Free ends of the grasping pawls 59 and 60 are curved inwardly and tapered off in order to enable them to securely grasp the residual rubbers G1 and G2. The connecting members 55, cylinders 56, the grasping pawls 59 and 60 and the transmission links 61 and 62 form as a whole a pair of grasping means 63 and 64 for grasping the residual rubbers G1 and G2 in the extrusion head 2. These grasping means 63 and 64 move in unison by moving means 65 consisting of the cylinders 34, 46 and 47 between a grasping position in the extrusion head 2 and an exhausting position on the other side of the extrusion head 2 and immediately above an exhausting conveyor (not shown).

The grasping pawls 59 and 60 are formed in free ends with a plurality of slits 66 and 67 extending in longitudinal directions. A pair of cylinders 71 and 72 are provided in the proximity of the grasping means 63 and so arranged that their piston rods 73 and 74 are inclined approaching their rod ends toward each other when extended. A plurality of abutting plates 75 and 76 are fixed to the rod ends of the piston rods 73 and 74 and adapted to be inserted into the slits 66 and 67 of the grasping pawls 59 and 60 by actuating the cylinders 71 and 72. When the abutting plates 75 and 76 are inserted in the slits 66 and 67, the residual rubber G1, if any, adhering to the grasping means 63 are impacted by the abutting plates 75 and 76 to be removed from the grasping means 63. In this manner, the residual rubber is disengaged from the grasping means 63. The cylinders 71 and 72 and the abutting plates 75 and 76 form as a whole disengaging means 77. Disengaging means 78 similar in construction to the disengaging means 77 is also provided in the proximity of the grasping means 64 for disengaging the residual rubber G2 adhering to the grasping means 64 therefrom by imparting impact to the rubber G2.

These disengaging means 77 and 78 are retracted leaving the moving passages of the grasping means 63 and 64. However, when the grasping means 63 and 64 grasping the residual rubbers G1 and G2 are moving toward the exhausting position, the disengaging means 77 and 78 are moved toward the moving passages of the grasping means 63 and 64 and toward each other. Control means 81 is provided to feed control signals to the grasping means 63 and 64, the moving means 65, disengaging means 77 and 78 and the holding means 23 and the driving means 24 in predetermined timing to control operations of these means.

The operation of the apparatus of the embodiment above described according to the invention will be explained hereinafter.

It is now assumed that different kinds of rubbers are being supplied into the extrusion head 2 by the screw of the extruder 1 and rubber sheets made of these rubbers are being extruded from the extrusion head 2 continuously. If it is required to change kinds of rubbers, the rubbers in the extrusion head 2 must be completely taken out of the head 2 to make it empty in order to avoid mixture of different kinds of the rubbers.

For this purpose, after the extruder 1 is rested, the V-block 5 is released from the lock of the main body 4. The piston rods 28 of the cylinders 27 are then extended to urge the rod ends of the piston rods 28 against the upper surface of the extrusion head 2. Therefore, reaction of the urging force acts upon the holding means 23 through the cylinders 27 so that the holding means 23 is slightly raised together with the V-block 5. As a result, the V-block 5 is disengaged from the residual rubbers adhering thereto in the extrusion head 2.

The piston rod 19 of the cylinder 18 is then retracted to raise the holding means 23 holding the V-block 5. Thereafter, the piston rod 16 of the cylinder 14 is retracted to move the movable trolley 13 onto one side of the extrusion head 2. As a result, the V-block 5 and the holding means 23 are moved to the poising position where the V-block 5 is waiting for a next actuation. At the moment, the piston rods 28 of the cylinders 27 are retracted.

By removing the V-block 5 from the extrusion head 2 in this manner, the extrusion head 2 is opened to expose the rubbers G1 and G2 remaining in the extrusion head 2. The piston rod 36 of the cylinder 34 is then extended to move the grasping means 63 and 64 to the position immediately above the extrusion head 2.

Thereafter, the piston rods 48 and 49 of the cylinders 46 and 47 are extended in synchronism with the each other to move the grasping means 63 and 64 to the grasping positions in the extrusion head 2. The piston rods 57 of the cylinders 56 are then retracted by actuating the cylinders 56 of the grasping means 63 and 64. As a result, the grasping pawls 59 and 60 of the grasping means 63 and 64 are closed to grasp the residual rubbers G1 and G2 on both sides in the extrusion head 2.

The piston rods 48 and 49 of the cylinders 46 and 47 are then retracted so that the grasping means 63 and 64 grasping the residual rubbers G1 and G2 are raised upwardly from the grasping positions so as to disengage from the extrusion head 2. In this case, even if the residual rubbers G1 and G2 are massive and firmly attached to the extrusion head 2 by their strong adhesive force, the residual rubbers G1 and G2 are reliably and easily removed from the extrusion head 2 inasmuch as the grasping means 63 and 64 are forcedly raised by the cylinders 46 and 47.

The piston rods 36 of the cylinder 34 are then retracted to move the grasping means 63 and 64 grasping the residual rubbers G1 and G2 to the exhaust position. When the grasping means 63 and 64 have arrived at the exhausting position, the cylinders 56 of the grasping means 63 and 64 are actuated to extend the piston rods 57, thereby opening the grasping pawls 59 and 60 of the grasping means 63 and 64.

Therefore, the residual rubbers G1 and G2 are released from the grasping of the grasping means 63 and 64 so that the rubbers G1 and G2 disengage from the grasping means 63 and 64 to fall onto the exhausting conveyor. If the residual rubbers G1 and G2 adhere to the grasping means 63 and 64, the rubbers G1 and G2 do not frequently disengage from the grasping means 63 and 64 only by opening the grasping pawls 59 and 60. In such a case, the disengaging means 77 and 78 are moved toward each other to the positions where the disengaging means overlap the grasping means 63 and 64. Thereafter, the piston rods 73 and 74 of the cylinders 71 and 72 of the disengaging means 77 and 78 are extended. As a result, the abutting plates 75 and 76 pass through the slits 66 and 67 of the grasping pawls 59 and 60 and abut against the residual rubbers G1 and G2 to impact the rubbers G1 and G2, thereby positively disengaging the rubbers G1 and G2 from the grasping means 63 and 64. The residual rubbers G1 and G2 thus taken out of the head are then transferred to the exhausting conveyor and then transferred to a station by the exhausting conveyor. As these rubbers are of the different kinds, they are required to be taken out of the head and transferred, separately.

The cylinders 14 and 18 are then actuated to move the holding means 23 and the V-block 5 from the poising position to the removing position. Thereafter, the holding means 23 and the V-block 5 are locked to the main body 4. At this moment, the cylinders 71 and 72 of the disengaging means 77 and 78 are actuated to return the abutting plates 75 and 76 to the initial positions. In order to control the various cylinders, the control means 81 feed control signals to the cylinders 14 and 18 of the driving means 24, the cylinders 27 of the holding means 23, the cylinders 34, 46 and 47 of the moving means 65, the cylinders 56 of the grasping means 63 and 64 and the cylinders 71 and 72 of the disengaging means 77 and 78. As a result, a worker for extrusion is free from an operation for taking residual solids G1 and G2 out of the head so that the productivity of tire building is improved and the burden on workers is lightened.

The holding means 23 may be poised remote from a position above the main body 4 rather than immediately above the main body 4. Although the residual matters are explained as rubbers in the above embodiment, they may be plastic materials, foods and the like.

As can be seen from the above explanation, according to the invention residual solid matters in an extrusion head can be easily removed for a short time to improve the productivity of tire building and lighten the burden on workers for extrusion.

While the invention has been particularly shown and described with reference to preferred embodiments thereof, it will be understood by those skilled in the art that the foregoing and other changes in form and details can be made therein without departing from the scope of the claims.

## Claims

1. Apparatus for taking residual solid matter out of an extrusion head (2) comprising grasping means (63, 64) for grasping residual solid matter (G1, G2) in the extrusion head, moving means (65) for moving the grasping means between a grasping position in the extrusion head and an exhausting position on one side of the extrusion head, disengaging means (77, 78) for urging the residual solid matter to disengage it from the grasping means when the grasping means has arrived at the exhausting position and released the residual solid matter, and control means (81) for controlling the grasping means, the moving means and the disengaging means.

2. Apparatus as claimed in claim 1, characterized in that said grasping means comprises a connecting member (55) for connecting the grasping means to the moving means, a cylinder (56) whose cylinder head is pivotally connected to the connecting member and piston rod end (57) is pivotally connected to a connecting plate (58), a pair of grasping pawls (59, 60) whose bottom ends are pivotally connected to the connecting plate, and transmission links (61, 62) whose one ends are pivotally connected to the connecting member and the other ends are pivotally connected to substantial centers of the grasping pawls.

3. Apparatus as claimed in claim 1 or 2, characterized in that said moving means comprises a trolley (33) for hanging the grasping means and movable along a horizontal rail (6), a horizontal cylinder (34) for horizontally moving the trolley by extending and retracting a piston rod of the horizontal cylinder, and at least one vertical cylinder (46, 47) for vertically moving the grasping means by extending and retracting a piston rod (48, 49) of the vertical cylinder.

4. Apparatus as claimed in any of claims 1 to 3, characterized in that the grasping means is formed with a plurality of slits (66, 67) extending in longitudinal directions thereof, and the disengaging means comprises a pair of cylinders (71, 72) whose piston rods (73, 74) are inclined approaching their rod ends toward each other when extended, and a plurality of abutting plates (75, 76) fixed to the rod ends of the cylinders to be inserted into the slits (66, 67) of the grasping means when the cylinders (71, 72) are actuated.

## Patentansprüche

1. Vorrichtung zum Herausnehmen fester Restmasse aus einem Extruderkopf (2) mit Greifermitteln (63, 64) zum Erfassen fester Restmasse (G1, G2) im Extruderkopf, Bewegungsmitteln (65) zum Bewegen der Greifermittel zwischen einer Greifposition im Extruderkopf und einer Entleerungsposition auf einer Seite des Extruderkopfes, Ablösemitteln (77, 78) zur zwangsläufigen Ablösung der festen Restmasse von den Greifermitteln, wenn die Greifermittel in der Entleerungsposition angelangt sind und die feste Restmasse freigegeben haben, und Steuermitteln (81) zum Steuern der Greifermittel, Bewegungsmittel und Ablösemittel.

2. Vorrichtung nach Anspruch 1, dadurch gekennzeichnet, daß die Greifermittel ein Verbindungsglied (55) zur Verbindung der Greifermittel mit den Bewegungsmitteln umfassen, ferner einen Zylinder (56), dessen Zylinderkopf schwenkbar mit dem Verbindungsglied verbunden und dessen Kolbenstangenende (57) schwenkbar mit einer Verbindungsplatte (58) verbunden ist, ferner ein Paar von Greiferklinken (59, 60), deren untere Enden schwenkbar mit der Verbindungsplatte verbunden sind, sowie Übertragungsglieder (61, 62), deren eine Enden schwenkbar mit dem Verbindungsglied und deren andere Enden schwenkbar im wesentlichen mit den Zentren der Greiferklinken verbunden sind.

3. Vorrichtung nach Anspruch 1 oder 2, dadurch gekennzeichnet, daß die Bewegungsmittel eine Laufkatze (33) zum Aufhängen der Greifermittel umfassen, die entlang einer horizontalen Schiene (6) beweglich ist, ferner einen horizontalen Zylinder (34) zur Horizontalverschiebung der Laufkatze durch Ausfahren und Zurückziehen einer Kolbenstange des horizontalen Zylinders, und wenigstens einen Vertikalzylinder (46, 47) zur Vertikalbewegung der Greifermittel durch Ausfahren und Zurückziehen einer Kolbenstange (48, 49) des vertikalen Zylinders.

4. Vorrichtung nach einem der Ansprüche 1 bis 3, dadurch gekennzeichnet, daß die Greifermittel mit einer Mehrzahl von Schlitzen (66, 67) ausgebildet sind, die in ihren Längsrichtungen verlaufen, und die Ablösemittel ein Paar von Zylindern (71, 72) umfassen, deren Kolbenstangen (73, 74) geneigt sind und ihren Kolben-stangenenden beim Ausfahren aneinander annähern, sowie eine Mehrzahl von Anschlagplatten (77, 76), die an den Stangenenden der Zylinder befestigt sind, um in die Schlitze (66, 67) der Greifermittel eingeführt zu werden, wenn die Zylinder (71, 72) betätigt werden.

## Revendications

1. Appareil pour retirer de la matière solide résiduelle hors d'une tête d'extrusion (2), comprenant un moyen de préhension (63, 64) pour saisir de la matière solide résiduelle (G1, G2) dans la tête d'extrusion, un moyen de déplacement (65) pour déplacer le moyen de préhension entre une position de préhension dans la tête d'extrusion et une position d'évacuation d'un côté de la tête d'extrusion, un moyen de dégagement (77, 78) pour forcer la matière solide résiduelle à se dégager du moyen de préhension lorsque le moyen de préhension a pris la position d'évacuation et a libéré la matière solidaire résiduelle, ainsi qu'un moyen de commande (81) pour commander le moyen de préhension, le moyen de déplacement et le moyen de dégagement.

2. Appareil selon la revendication 1, caractérisé en ce que ledit moyen de préhension comprend un moyen de liaison (55) pour relier le moyen de préhension au moyen de déplacement, un cylindre (56) dont la tête est reliée en pivotement à l'élément de liaison et dont l'extrémité (57) de la tige de piston est reliée en pivotement à une plaque de liaison (58), une paire de mâchoires de préhension (59, 60) dont les extrémités inférieures sont reliées en pivotement à la plaque de liaison, ainsi que des articulations de transmission (61, 62) dont les premières extrémités sont reliées en pivotement à l'élément de liaison et dont les autres extrémités sont reliées en pivotement aux centres réels des mâchoires de préhension.

3. Appareil selon la revendication 1 ou 2, caractérisé en ce que ledit moyen de déplacement comprend un chariot (33) destiné à suspendre le moyen de préhension et apte à se déplacer le long d'un rail horizontal (6), un cylindre horizontal (34) destiné à déplacer horizontalement le chariot en allongeant et en rétractant une tige de piston du cylindre horizontal, et au moins un cylindre vertical (46, 47) pour déplacer verticalement le moyen de préhension en allongeant et en rétractant une tige de piston (48, 49) du cylindre vertical.

4. Appareil selon l'une quelconque des revendications 1 à 3, caractérisé en ce que, dans le moyen de préhension, sont pratiquées plusieurs fentes (66, 67) s'étendant dans sa direction longitudinale, et le moyen de dégagement comprend une paire de cylindres (71, 72) dont les tiges de piston (73, 74) sont inclinées l'une vers l'autres à l'approche de leurs extrémités de tige, lorsqu'elles sont allongées, ainsi que plusieurs plaques de butée (75, 76) fixées aux extrémités des tiges des cylindres, pour venir s'insérer dans les fentes (66, 67) du moyen de préhension lorsque les cylindres (71, 72) sont entraînés.
